# EUROPÄISCHE PATENTSCHRIFT

(11) **EP 1 068 440 B1**
(45) Veröffentlichungstag und Bekanntmachung des Hinweises auf die Patenterteilung: **29.10.2003**
(21) Anmeldenummer: 99952331.9
(22) Anmeldetag: 07.08.1999
(51) Int. Cl.: F02M 51/06

(54) **ELEKTROMAGNETISCH BETÄTIGBARES VENTIL**
ELECTROMAGNETICALLY ACTUATED VALVE
VANNE ELECTROMAGNETIQUE

(30) Priorität: 02.12.1998 DE 19855547
(43) Veröffentlichungstag der Anmeldung: 17.01.2001
(73) Patentinhaber: ROBERT BOSCH GMBH, 70442 Stuttgart (DE)
(72) Erfinder: HORBELT, Michael, D-71665 Vaihingen (DE)
(86) Internationale Anmeldenummer: DE9902474
(87) Internationale Veröffentlichungsnummer: WO00032925

(56) Entgegenhaltungen:
- GB-A- 2 196 181
- US-A- 4 417 693
- US-A- 5 203 538
- PATENT ABSTRACTS OF JAPAN vol. 009, no. 070 (M-367), 30. März 1985 (1985-03-30) & JP 59 201966 A (AISAN KOGYO KK), 15. November 1984 (1984-11-15)

## Beschreibung

### Stand der Technik

Die Erfindung geht aus von einem elektromagnetisch betätigbaren Ventil nach der Gattung des Hauptanspruchs.

Es sind bereits elektromagnetisch betätigbare Ventile in Form von Brennstoffeinspritzventilen bekannt, bei denen ein Magnetanker zum Zwecke des Herabsetzens des Prellverhaltens eines mit einer Ventilnadel verbundenen Ventilschließkörpers im Ventilsitzbereich und somit zur Vermeidung von ungewollten Öffnungen des Ventils relativ beweglich zur Ventilnadel auf dieser angeordnet ist.

Aus der DE-OS 33 14 899 ist bereits ein elektromagnetisch betätigbares Brennstoffeinspritzventil bekannt, bei welchem zur elektromagnetischen Betätigung ein Magnetanker mit einer elektrisch erregbaren Magnetspule zusammenwirkt und der Hub des Magnetankers über eine Ventilnadel auf einen Ventilschließkörper übertragen wird. Zur Bildung eines Dichtventils wirkt der Ventilschließkörper mit einem Ventilsitz zusammen. Der Magnetanker ist an der Ventilnadel nicht starr befestigt, sondern relativ gegenüber der Ventilnadel axial beweglich angeordnet. Eine erste Rückstellfeder beaufschlagt die Ventilnadel in Schließrichtung und hält somit das Einspritzventil im stromlosen, nicht erregten Zustand der Magnetspule geschlossen. Der Magnetanker wird mittels einer zweiten Rückstellfeder in Hubrichtung so beaufschlagt, dass der Magnetanker in der Ruhestellung an einem ersten, an der Ventilnadel vorgesehenen Anschlag anliegt. Bei Erregen der Magnetspule wird der Magnetanker in Hubrichtung angezogen und nimmt über den ersten Anschlag die Ventilnadel mit. Beim Abschalten des die Magnetspule erregenden Stromes wird die Ventilnadel mittels der ersten Rückstellfeder in ihre Schließstellung beschleunigt und führt über den beschriebenen Anschlag den Anker mit. Sobald der Ventilschließkörper auf dem Ventilsitz auftrifft wird die Schließbewegung der Ventilnadel abrupt beendet. Die Bewegung des mit der Ventilnadel nicht starr verbundenen Magnetankers setzt sich entgegen der Hubrichtung fort und wird von der zweiten Rückstellfeder aufgefangen, d.h. der Magnetanker schwingt gegen die gegenüber der ersten Rückstellfeder eine wesentlich geringere Federkraft aufweisende zweite Rückstellfeder durch. Die zweite Rückstellfeder beschleunigt den Magnetanker schließlich erneut in Hubrichtung. Wenn der Magnetanker an dem Anschlag der Ventilnadel auftrifft, kann dies zu einem erneuten kurzzeitigen Abheben des mit der Ventilnadel verbundenen Ventilschließkörpers von dem Ventilsitz und somit zum kurzzeitigen Öffnen des Ventils führen.

Außerdem wird in der DE-OS 33 14 899 ein Kraftstoffeinspritzventil vorgeschlagen, das einen fest mit der Ventilnadel verbundenen Anker und eine bewegbare Zusatzmasse aufweist. Bei diesem Ventil sind zwei Rückstellfedern vorgesehen, und zwar eine erste Rückstellfeder als Schraubenfeder für die Ventilnadel mit Anker und eine zweite Rückstellfeder als Tellerfeder für die Zusatzmasse. Die Zusatzmasse liegt im geschlossenen Zustand des Ventils auf einem gehäusefesten Ventilkörper auf, so dass zwischen einem Anschlagteller der Ventilnadel und der Zusatzmasse bei geschlossenem Ventil ein Abstand verbleibt. Nach dem Einschalten des Erregerstroms wird der Anker und damit die fest mit ihm verbundene Ventilnadel gegen die Kraft der Schraubenfeder angezogen. Nach Zurücklegen eines Teils des Ventilnadelweges prallt der Anschlagteller der Ventilnadel gegen die Zusatzmasse, wobei sich die Federkraft der Schraubenfeder zu der Federkraft der Tellerfeder addiert. Gegen Ende der Anzugsbewegung schlägt der Anker auf den Magnetpol auf und prallt zurück. Die Zusatzmasse kann ihre Bewegung gegen die Kraft der Tellerfeder fortsetzen, wodurch der Anker entlastet wird und ein hoher Magnetkraftüberschuss zum Abbremsen der Prellbewegung zur Verfügung steht. Nach Abschalten des Magneten wird der Anker bzw. die Ventilnadel durch die gemeinsame Kraft der beiden Federn zurückgestellt.

In der US-PS 5,299,776 ist in dem Zusammenhang der Prellerreduzierung vorgeschlagen worden, den Magnetanker nicht starr mit der Ventilnadel zu verbinden, sondern dem Magnetanker ein gewisses axiales Bewegungsspiel an der Ventilnadel zu ermöglichen. Die axiale Lage des Magnetankers in der Ruhestellung des Brennstoffeinspritzventils ist jedoch bei dieser Ausgestaltung nicht definiert und somit ist bei dem aus dieser Druckschrift bekannten Ventil die Ansprechzeit beim Einschalten des Erregerstroms unbestimmt.

Unabhängig von solchen elektromagnetisch betätigbaren Ventilen mit einem axial auf der Ventilnadel beweglichen Magnetanker zur Herabsetzung bzw. Vermeidung des Prellens der Ventilnadel am Ventilsitz sind hinlänglich elektromagnetisch betätigbare Ventile, z.B. in Form von Brennstoffeinspritzventilen, bekannt, bei denen der Magnetanker, die Ventilnadel und der Ventilschließkörper ein starres axial bewegliches Ventilglied bilden. Bei solchen bekannten, zur Brennstoffeinspritzung in Kraftfahrzeugen zahlreich verwendeten Ventilen besteht eine der wesentlichen Aufgaben darin, dieses Ventilglied möglichst rasch (im Größenbereich von 0,2 bis 1 ms) aus der in Schließstellung des Ventils am Ventilsitz anliegenden Ruhelage zu beschleunigen. Dazu muß in der Ansteuerphase ein sehr hoher Energieimpuls eingebracht werden, der einen kurzzeitig sehr hohen Boosterstrom von deutlich über 10 A bei 120 V zum Losreißen der Ventilnadel erforderlich macht. Dieser hohe Boosterstrom ist wiederum nur mittels elektrischer Sondermaßnahmen (aufwendige Schaltungselektronik) bei den heute bekannten Ventilen erzielbar. Diese Maßnahmen werden um so umfangreicher, je höher der Brennstoffgegendruck (z.B. bei der Benzindirekt-einspritzung) ist.

### Vorteile der Erfindung

Das erfindungsgemäße elektromagnetisch betätigbare Ventil mit den kennzeichnenden Merkmalen des Hauptanspruchs hat demgegenüber den Vorteil, dass das Losreißen der Ventilnadel und damit das Öffnen des Ventils in zumindest gleicher Zeit oder sogar noch schneller als in 0,2 ms erfolgt und dafür in vorteilhafter Weise keine hohen Stromspitzen eines Boosterstroms erforderlich sind. Durch das Einbringen eines mechanischen Impulses mittels eines beweglichen Hilfskörpers an der Ventilnadel ist ein konstruktiv sehr einfaches System geschaffen, für das zur Erregung eine gegenüber den bekannten Elektromagnetsystemen bei gattungsgemäßen Ventilen deutlich einfachere Schaltungselektronik benötigt wird.

Durch die in den Unteransprüchen aufgeführten Maßnahmen sind vorteilhafte Weiterbildungen und Verbesserungen des im Hauptanspruch angegebenen elektromagnetisch betätigbaren Ventils möglich.

Weitere Vorteile sind außerdem der nachfolgenden Beschreibung der Ausführungsbeispiele entnehmbar.

### Zeichnung

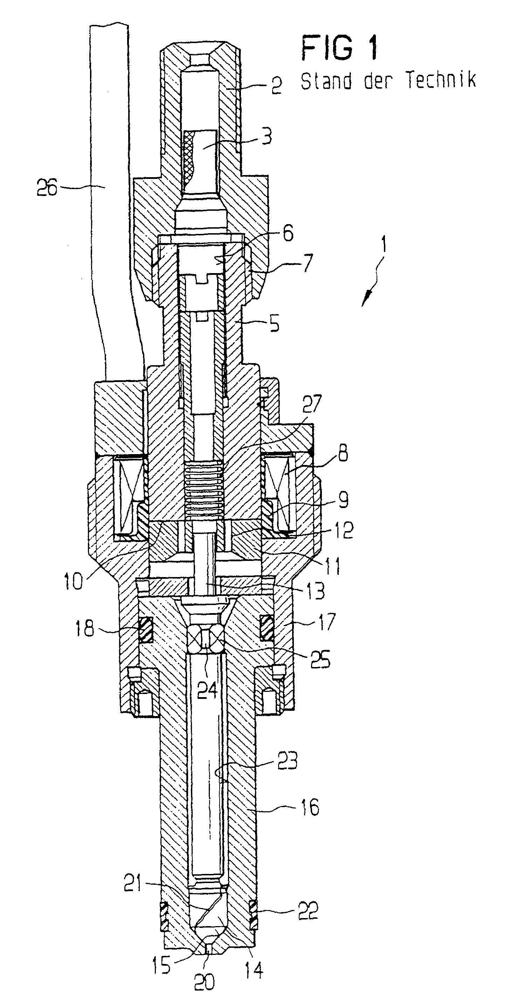

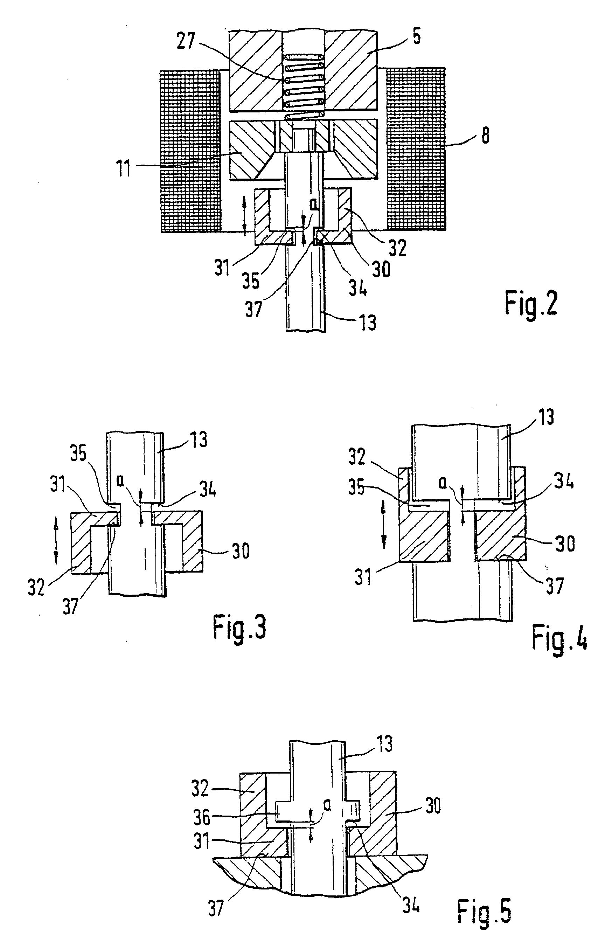

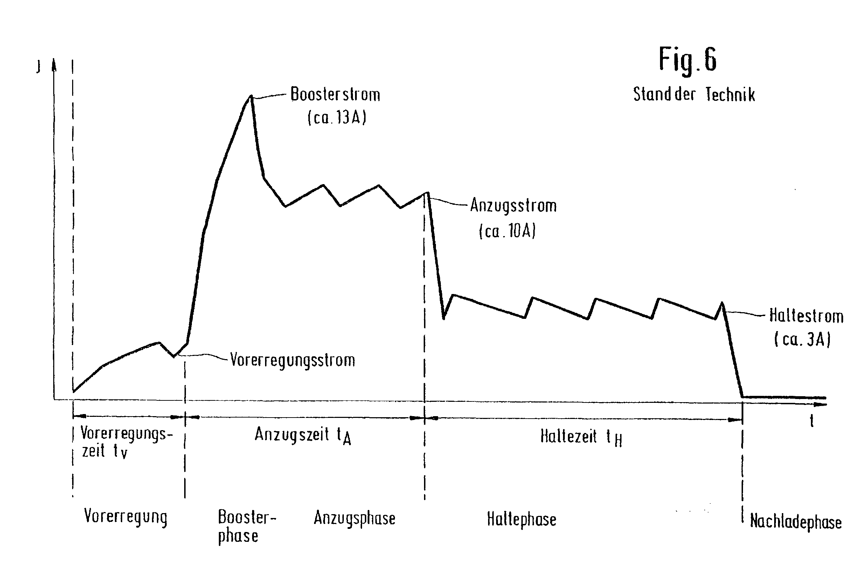

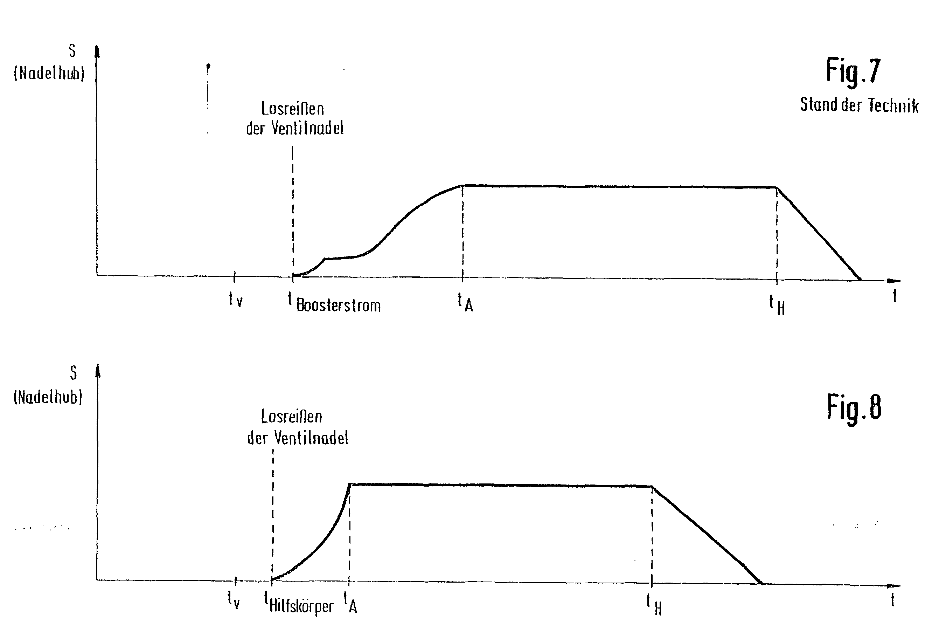

Ausführungsbeispiele der Erfindung sind in der Zeichnung vereinfacht dargestellt und in der nachfolgenden Beschreibung näher erläutert. Es zeigen Figur 1 ein elektromagnetisch betätigbares Ventil als Brennstoffeinspritzventil gemäß dem Stand der Technik, Figur 2 ein erstes Beispiel eines erfindungsgemäßen Hilfskörpers, Figur 3 ein zweites Beispiel eines erfindungsgemäßen Hilfskörpers, Figur 4 ein drittes Beispiel eines erfindungsgemäßen Hilfskörpers, Figur 5 ein viertes Beispiel eines erfindungsgemäßen Hilfskörpers, wobei die Figuren 2 bis 5 ausschnittsweise und symbolhaft jeweils den erfindungsgemäßen Ventilbereich zeigen, Figur 6 ein Strom-Zeit-Diagramm zur Ansteuerung eines Ventils, wie es beispielsweise in Figur 1 gezeigt ist, Figur 7 ein Weg-Zeit-Diagramm zur Verdeutlichung des Nadelhubs entsprechend dem Strom-Zeit-Diagramm gemäß Figur 6 und Figur 8 ein Weg-Zeit-Diagramm zur Verdeutlichung des Nadelhubs bei einem erfindungsgemäßen Ventil.

### Beschreibung der Ausführungsbeispiele

Bevor anhand der in vereinfachter symbolhafter Weise dargestellten Figuren 2 bis 5 mehrere Ausführungsbeispiele eines erfindungsgemäßen elektromagnetisch betätigbaren Ventils beschrieben werden, soll zum besseren Verständnis der Erfindung zunächst anhand von Figur 1 ein bereits bekanntes elektromagnetisch betätigbares Ventil bezüglich seiner wesentlichen Bauteile kurz erläutert werden.

Das allgemein mit dem Bezugszeichen 1 versehene Ventil weist einen Brennstoffeinlaßstutzen 2 auf, welcher über ein Gewinde mit einer Brennstoffleitung bzw. einem Brennstoffverteiler in bekannter Weise verbindbar ist. Das Ventil 1 ist in Form eines Einspritzventils für Brennstoffeinspritzanlagen von gemischverdichtenden, fremdgezündeten Brennkraftmaschinen ausgeführt, wobei sich das in Figur 1 beispielhaft dargestellte Ventil 1 besonders zum direkten Einspritzen von Brennstoff in einen nicht dargestellten Brennraum der Brennkraftmaschine eignet. Der Brennstoff gelangt über einen Brennstofffilter 3 zu einer in einem Kern 5 ausgebildeten Längsbohrung 6. Der Kern 5 weist einen äußeren Gewindeabschnitt 7 auf, der mit dem Brennstoffeinlaßstutzen 2 verschraubt ist.

Der Kern 5 ist an seinem stromabwärtigen Ende 10 von einer Magnetspule 8 zumindest teilweise umgeben, die auf einen Spulenträger 9 gewickelt ist. Stromabwärts des Endes 10 des Kerns 5 befindet sich ein durch einen geringfügigen Spalt von dem Ende 10 beabstandeter Anker 11. Der Anker 11 weist Bohrungen 12 für den Durchtritt des Brennstoffs auf. An einer Ventilnadel 13 ist der Anker 11 z.B. durch Schweißen fest verbunden. An dem dem Anker 11 gegenüberliegenden Ende weist die Ventilnadel 13 einen Ventilschließkörper 14 auf, der mit einem an einem Ventilsitzträger 16 ausgebildeten Ventilsitz 15 zusammenwirkt. Der Ventilsitzträger 16 ist in dem in Figur 1 dargestellten Beispiel in einen Gehäusekörper 17 eingesetzt und mittels eines Dichtrings 18 abgedichtet.

Der Gehäusekörper 17 ist mittels eines Gewindes in einen nicht dargestellten Zylinderkopf einer Brennkraftmaschine einschraubbar. Beim Öffnen des Ventils 1 wird Brennstoff über wenigstens eine am stromabwärtigen Ende des Ventilsitzträgers 16 ausgebildete Abspritzöffnung 20 in einen nicht dargestellten Brennraum eingespritzt. Zur besseren Verteilung und Aufbereitung des Brennstoffs dienen z.B. mehrere umfänglich eingebrachte Drallnuten 21 an dem Ventilschließkörper 14. Zur Abdichtung des Ventilsitzträgers 16 in der Bohrung des Zylinderkopfes dient eine umfänglich angebrachte Dichtung 22. Die Ventilnadel 13 wird in einer Längsöffnung 23 des Ventilsitzträgers 16 mittels Führungsflächen 24 geführt. Zwischen den Führungsflächen 24 befinden sich Abflachungen 25, um den ungehinderten Durchfluss des Brennstoffs zu ermöglichen.

Zum Öffnen des Ventils 1 wird die Magnetspule 8 durch einen elektrischen Erregerstrom erregt, der über ein elektrisches Verbindungskabel 26 zugeführt wird. In der folgenden Beschreibung, vor allen Dingen anhand der Figuren 6 und 7, wird noch näher auf die elektrische Erregung eingegangen. Im Ruhezustand des Ventils 1 wird der Anker 11 über eine Rückstellfeder 27 entgegen seiner Hubrichtung so beaufschlagt, dass der Ventilschließkörper 14 an dem Ventilsitz 15 in dichtender Anlage gehalten wird. Bei Erregung der Magnetspule 8 wird der Anker 11 in Hubrichtung an den Kern 5 gezogen, wobei der Hub durch den zwischen Kern 5 und Anker 11 gebildeten Spalt vorgegeben ist. Die fest mit dem Anker 11 verbundene Ventilnadel 13 und der Ventilschließkörper 14 werden in Hubrichtung zusammen als axial bewegliches Ventilglied mitgeführt, so dass der Ventilschließkörper 14 die Abspritzöffnung 20 freigibt. Beim Abschalten des Erregerstroms wird das Ventilglied 11, 13, 14 durch die Rückstellfeder 27 in Schließrichtung entgegen der Hubrichtung an den Ventilsitz 15 gedrückt.

In den Figuren 2 bis 5 sind mehrere Ausführungsbeispiele eines erfindungsgemäßen Ventils dargestellt, wobei die Darstellungen nur ausschnittsweise jeweils den Bereich des elektromagnetischen Kreises mit einer axial beweglichen Ventilnadel zum Öffnen und Schließen des Ventils symbolhaft verdeutlichen. Allen Ausführungsbeispielen ist dabei gemeinsam, dass zwischen dem fest mit der Ventilnadel 13 verbundenen Anker 11 und dem das stromabwärtige Ende der Ventilnadel 13 bildenden Ventilschließkörper 14 an der Ventilnadel 13 ein Hilfskörper 30 angeordnet ist, der durch noch zu erläuternde Maßnahmen über einen kleinen Axialbereich zu ihr relativ beweglich ist. Der Hilfskörper 30 auf der Ventilnadel 13 soll dabei zwei wesentliche Funktionen erfüllen, zum einen wird das Losreißen der Ventilnadel 13 vom Ventilsitz 15 und damit das Öffnen des Ventils beschleunigt, und zum anderen wird ein ansonsten zum Losreißen benötigter hoher Boosterstrom (Figur 6) vermieden. In der Konsequenz wird so das dynamische Verhalten des Ventils deutlich verbessert und eine aufwendige Schaltungselektronik kann entfallen.

Die in den Figuren 2 bis 5 dargestellten Hilfskörper 30 haben eine sich ähnelnde Struktur, zu der ein sich beispielsweise radial erstreckender Anschlagabschnitt 31 und ein sich axial erstreckender und ringförmig umlaufender Führungsabschnitt 32 gehören. Es soll jedoch betont werden, dass auch von den dargestellten Beispielen abweichende Ausbildungsformen der Hilfskörper 30 zum Einsatz kommen können. Jeder Anschlagabschnitt 31 eines Hilfskörpers 30 wirkt mit einem Mitnehmermittel 34 der Ventilnadel 13 zusammen. In den Figuren 2 bis 4 sind Beispiele gezeigt, bei denen die Mitnehmermittel 34 Teil einer nutähnlichen Einkerbung 35 sind. In diesen Fällen ist das Mitnehmermittel 34 die obere, dem Anker 11 näherliegende Begrenzungsfläche der Einkerbung 35. In Figur 5 ist eine Ventilnadel 13 teilweise dargestellt, die anstelle der Einkerbung 35 einen radial überstehenden Bund 36 besitzt, wobei in diesem Falle die untere, dem Ventilschließkörper 14 näherliegende Stirnfläche das Mitnehmermittel 34 bildet.

Im nicht erregten Zustand liegt der Hilfskörper 30 auf einem Ruhemittel 37 auf, und zwar bei den Beispielen der Figuren 2 bis 4 auf der unteren, dem Anker 11 entfernteren Begrenzungsfläche der Einkerbung 35 und beim Beispiel der Figur 5 auf einer gehäusefesten Stirnfläche, die z.B. Teil des Ventilsitzträgers 16 ist. Als Alternative zur letztgenannten Ausbildung könnte auch ein zweiter, nicht dargestellter Bund an der Ventilnadel 13 vorgesehen sein, der mit einer oberen, dem Anker 11 zugewandten Stirnfläche als Ruhemittel 37 die gehäusefeste Stirnfläche ersetzt, so dass der Bewegungsbereich des Hilfskörpers 30 zwischen den zwei Bunden 36 festgelegt wäre.

Die in den Figuren 2 bis 5 dargestellten Hilfskörper 30 haben eine becherförmige Gestalt, wobei der Anschlagabschnitt 31 jeweils einen Bodenbereich und der Führungsabschnitt 32 jeweils einen Mantelbereich bilden. Der Führungsabschnitt 32 dient der Führung des Hilfskörpers 30 während seiner Axialbewegung, wobei die Führung entweder am äußeren Umfang der Ventilnadel 13 oder entlang der Wandung der Längsöffnung 23 erfolgt. Der Führungsabschnitt 32 kann sich entweder vom Anschlagabschnitt 31 ausgehend in Richtung zum Anker 11 (Figuren 2, 4 und 5) oder in Richtung zum Ventilschließkörper 14 (Figur 3) erstrecken. Wie in Figur 4 gezeigt, kann der Anschlagabschnitt 31 eine deutlich größere Dicke aufweisen als die Wandungsstärke des Führungsabschnitts 32. Der axiale Abstand zwischen dem Mitnehmermittel 34 und dem Ruhemittel 37 ist in jedem Falle geringfügig größer als die axiale Erstreckung des Hilfskörpers 30, hier in Form des Anschlagabschnitts 31, zwischen den Mitteln 34 und 37, um die schon angesprochene Axialbewegung ausführen zu können. Der sich so in Ruhelage des Hilfskörpers 30 ergebende Spalt ist mit a bezeichnet. Der Anschlagabschnitt 31 bzw. das Mitnehmermittel 34 sind beispielsweise zur Vermeidung von Verschleiß beschichtet.

Anhand des Strom-Zeit-Diagramms der Figur 6 soll nun in Kurzform erläutert werden, wie die Erregung zum Öffnen eines Ventils, insbesondere des in Figur 1 dargestellten Brennstoffeinspritzventils zur direkten Benzineinspritzung in den Brennraum einer Brennkraftmaschine, in bekannter Weise erfolgt. Die Ansteuerung der Ventile erfolgt z.B. über ein Endstufenschaltgerät in Verbindung mit einem Steuergerät, das über eine hochwertige, aber aufwendige Leistungselektronik verfügt. Eine solche Endstufe ist z.B. so ausgelegt, um vier Einspritzventile anzusteuern, wobei der Ventilstrom über eine getaktete Stromregelung eingestellt wird. Nach einer kurzen Vorerregungszeit t_{V} folgt die eigentliche Öffnungszeit, wobei in eine Anzugszeit t_{A} und eine Haltezeit t_{H} unterschieden wird. In diesen Zeiten herrschen ein Anzugsstrom- und ein Haltestromniveau.

Das erhöhte Anzugsstromniveau dient dazu, die Öffnungszeit des Ventils zu verringern. Zusätzlich wird innerhalb des Endstufenschaltgeräts ein Booster-Kondensator auf eine Spannung von ca. 120 V aufgeladen. Die Entladung des Booster-Kondensators über das elektromagnetisch betätigbare Ventil führt zu einem steilen Stromanstieg (bis ca. 13 A), so dass die maximale Magnetkraft schnell aufgebaut und das Ventil entsprechend schnell geöffnet wird. Nachdem das Ventil vollständig geöffnet ist, also die Anzugsphase mit einem Ventilstrom von ca. 10 A beendet ist, wird der Ventilstrom mittels Stromregelung auf ein niedrigeres Haltestromniveau von ca. 3 A abgesenkt. Nach erfolgter Einspritzung schließt sich eine Nachladephase an. Innerhalb dieser Phase wird der Booster-Kondensator nachgeladen, um die Endstufe auf den nächsten Einspritzvorgang vorzubereiten.

Mit der erfindungsgemäßen Ausgestaltung des Ventils gemäß den Figuren 2 bis 5 werden die gleichen positiven Effekte einer schnellen Öffnung bzw. eines sehr guten dynamischen Verhaltens des Ventils erzielt, wobei in vorteilhafter Weise auf einen hohen Boosterstrom zum Losreißen der Ventilnadel 13 vom Ventilsitz 15 und deshalb zumindest teilweise auf Leistungselektronik verzichtet werden kann. Insgesamt kann die elektronische Ansteuerung vereinfacht werden. Bei dem erfindungsgemäßen Ventil wird das Losreißen der Ventilnadel 13 durch einen mechanischen Impuls erzeugt. Im elektromagnetischen Feld bzw. in einem Teil desselben ist der Hilfskörper 30 mit einer geeigneten Masse, wie in den Figuren 2 bis 5 angedeutet, an der Ventilnadel 13 angebracht. Der Hilfskörper 30 wird bereits bei einem wählbaren Teilwert des zur Erregung benötigten Anzugsstroms t_{A} zum Abheben der Ventilnadel 13 beschleunigt. Dies kann beispielsweise gegen die Federkraft einer zweiten, nicht dargestellten Rückstellfeder, die den Hilfskörper 30 nach jedem Abheben beispielsweise immer wieder in seine Ruhelage bringt, erfolgen. Über die Größe des Magnetfelds, die Masse des Hilfskörpers 30 und die Größe des Spalts a läßt sich einstellen, wieviel Energie der Hilfskörper 30 beim Anschlagen am Mitnehmermittel 34 an die Ventilnadel 13 abgeben kann. Durch das schlagartige Aufprallen des Hilfskörpers 30 am Mitnehmermittel 34 der Ventilnadel 13 erhält die Ventilnadel 13 einen entscheidenden Impuls, so dass zusätzlich zur im Magnetfeld erzeugten Anzugskraft auf den Anker 11 eine kurzfristige starke Beschleunigung der Ventilnadel 13 und damit ein schnelles Öffnen des Ventils erreicht wird.

In den Weg-Zeit-Diagrammen der Figuren 7 und 8 sind beispielhaft die Verlaufskurven des Nadelhubs dargestellt, wobei der Figur 7 ein Verlauf entsprechend einer Ansteuerung gemäß Figur 6 eines bekannten Ventils nach Figur 1 und der Figur 8 ein Verlauf eines erfindungsgemäßen Ventils entnehmbar sind. Mit diesen Diagrammen soll nur angedeutet werden, dass mit einer erfindungsgemäßen Anordnung unter Verzicht eines hohen Boosterstroms zumindest eine gleiche Anzugszeit t_{A} oder sogar, wie dargestellt, eine geringere Anzugszeit t_{A} erzielbar ist. Besonders deutlich wird der steile Anstieg der Kurve nach dem Anschlagen des Hilfskörpers 30 an der Ventilnadel 13 und dem damit verbundenen Losreißen der Ventilnadel 13. Auf diese Weise sind Anzugszeiten t_{A} von weniger als 0,2 ms realisierbar.

## Patentansprüche

1. Elektromagnetisch betätigbares Ventil mit einem Kern (5), mit einer Magnetspule (8) und mit einem durch die Magnetspule (8) in einer Hubrichtung gegen eine Rückstellfeder (27) beaufschlagbaren Anker (11), der einen mit einem festen Ventilsitz (15) zusammenwirkenden Ventilschließkörper (14) betätigt, und mit einer Ventilnadel (13), die sowohl mit dem Anker (11) als auch mit dem Ventilschließkörper (14) fest verbunden ist und ein bewegbares Ventilglied bildet, sowie mit einem auf der Ventilnadel (13) zwischen dem Anker (11) und dem Ventilschließkörper (14) angeordneten Hilfskörper (30), der relativ zur Ventilnadel (13) bewegbar ist, **dadurch gekennzeichnet, dass** die Ventilnadel (13) derart ausgeführt ist und der Hilfskörper (30) derart angeordnet ist, dass bei einer Bewegung des Hilfskörpers (30) in Hubrichtung durch Energieübertragung die Ventilnadel (13) in gleicher Richtung beschleunigbar ist.

2. Ventil nach Anspruch 1, **dadurch gekennzeichnet, dass** der Hilfskörper (30) einen Anschlagabschnitt (31) aufweist, mit dem die Energieübertragung auf die Ventilnadel (13) erfolgt.

3. Ventil nach Anspruch 2, **dadurch gekennzeichnet, dass** die Ventilnadel (13) ein Mitnehmermittel (34) aufweist, an dem die Ventilnadel (13) beim Anschlagen des Anschlagabschnitts (31) des Hilfskörpers (30) mitnehmbar ist.

4. Ventil nach Anspruch 2 oder 3, **dadurch gekennzeichnet, dass** der Hilfskörper (30) becherförmig ausgeführt ist und neben dem Anschlagabschnitt (31) noch einen Führungsabschnitt (32) besitzt.

5. Ventil nach Anspruch 3, **dadurch gekennzeichnet, dass** das Mitnehmermittel (34) die dem Anker (11) näherliegende Begrenzungsfläche einer an der Ventilnadel (13) vorgesehenen Einkerbung (35) ist.

6. Ventil nach Anspruch 3, **dadurch gekennzeichnet, dass** das Mitnehmermittel (34) die dem Anker (11) abgewandte Stirnfläche eines an der Ventilnadel (13) vorgesehenen Bundes (36) ist.

7. Ventil nach Anspruch 5, **dadurch gekennzeichnet, dass** die vom Anker (11) entfernter liegende Begrenzungsfläche der Einkerbung (35) ein Ruhemittel bildet, an dem der Hilfskörper (30) bei geschlossenem Ventil anliegt.

8. Ventil nach Anspruch 1 oder 2, **dadurch gekennzeichnet, dass** eine weitere Rückstellfeder vorgesehen ist, mit der der Hilfskörper (30) gegen ein Ruhemittel (37) drückbar ist.

9. Ventil nach Anspruch 1, **dadurch gekennzeichnet, dass** das Ventil als Brennstoffeinspritzventil, insbesondere zum direkten Einspritzen von Brennstoff in den Brennraum einer Brennkraftmaschine, ausführbar ist.

## Claims

1. Electromagnetically actuable valve, with a core (5), with a magnet coil (8) and with an armature (11) which is capable of being acted upon by the magnet coil (8) in a lifting direction counter to a return spring (27) and which actuates a valve-closing body (14) cooperating with a fixed valve seat (15), and with a valve needle (13) which is firmly connected both to the armature (11) and to the valve-closing body (14) and forms a moveable valve member, and also with an auxiliary body (30) which is arranged on the valve needle (13) between the armature (11) and the valve-closing body (14) and is moveable relative to the valve needle (13), **characterized in that** the valve needle (13) is designed and the auxiliary body (30) arranged in such a way that, in the event of a movement of the auxiliary body (30) in the lifting direction, the valve needle (13) can be accelerated in the same direction as a result of the transmission of energy.

2. Valve according to Claim 1, **characterized in that** the auxiliary body (30) has an abutment portion (31), by means of which the transmission of energy to the valve needle (13) takes place.

3. Valve according to Claim 2, **characterized in that** the valve needle (13) has a driving means (34), at which the valve needle (13) can be driven when the abutment portion (31) of the auxiliary body (30) comes into abutment.

4. Valve according to Claim 2 or 3, **characterized in that** the auxiliary body (30) has a cup-shaped design and also possesses, in addition to the abutment portion (31), a guide portion (32).

5. Valve according to Claim 3, **characterized in that** the driving means (34) is that boundary surface of an indentation (35) provided on the valve needle (13) which lies nearer to the armature (11).

6. Valve according to Claim 3, **characterized in that** the driving means (34) is that end face of a collar (36) provided on the valve needle (13) which faces away from the armature (11).

7. Valve according to Claim 5, **characterized in that** that boundary surface of the indentation (35) which lies further away from the armature (11) forms a resting means, against which the auxiliary body (30) comes to bear when the valve is closed.

8. Valve according to Claim 1 or 2, **characterized in that** a further return spring is provided, by means of which the auxiliary body (30) can be pressed against a resting means (37).

9. Valve according to Claim 1, **characterized in that** the valve can be designed as a fuel injection valve, in particular for the direct injection of fuel into the combustion space of an internal combustion engine.

## Revendications

1. Soupape à commande électromagnétique comportant un noyau (5) avec une bobine électromagnétique (8) et un induit (11) sollicité par la bobine électromagnétique (8) dans une direction de déplacement contre un ressort de rappel (27), l'induit actionnant un organe d'obturation de soupape (14) coopérant avec un siège de soupape (15), fixe, et une aiguille d'injecteur (13) reliée solidairement à la fois avec l'induit (11) et avec l'organe d'obturation de soupape (14) et formant un organe de soupape mobile, ainsi qu'un organe auxiliaire (30) prévu sur l'aiguille d'injecteur (13) entre l'induit (11) et l'organe d'obturation (14), cet organe auxiliaire étant mobile par rapport à l'aiguille d'injecteur (13),
**caractérisée en ce que**
l'aiguille d'injecteur (13) est réalisée et l'organe auxiliaire (30) est installé de façon que pour un mouvement de l'organe auxiliaire (30) dans la direction de déplacement, la transmission de l'énergie accélère l'aiguille d'injecteur (13) dans la même direction.

2. Soupape selon la revendication 1,
**caractérisée en ce que**
l'organe auxiliaire (30) comporte un segment de butée (31) qui assure la transmission de l'énergie à l'aiguille d'injecteur (13).

3. Soupape selon la revendication 2,
**caractérisée en ce que**
l'aiguille d'injecteur (13) comporte un moyen d'entraînement (34) par lequel l'aiguille (13) est entraînée lors de la venue en butée du segment de butée (31) de l'organe auxiliaire (30).

4. Soupape selon la revendication 2 ou 3,
**caractérisée en ce que**
l'organe auxiliaire (30) est en forme de gobelet et possède un segment de guidage (32) en plus du segment de butée (31).

5. Soupape selon la revendication 3,
**caractérisée en ce que**
le moyen d'entraînement (34) est la surface limite d'une encoche (35) prèvue dans l'aiguille d'injecteur (13), surface la plus proche de l'induit (11).

6. Soupape selon la revendication 3,
**caractérisée en ce que**
le moyen d'entrainement (34) est la surface d'une collerette (36) de l'aiguille d'injecteur (13), surface située du côté opposé à l'induit (11).

7. Soupape selon la revendication 5,
**caractérisée en ce que**
la surface limite de l'encoche (35) éloignée de l'induit (11) constitue un moyen de repos contre lequel vient l'organe auxiliaire (30) lorsque la soupape est fermée.

8. Soupape selon la revendication 1 ou 2,
**caractérisée par**
un autre ressort de rappel qui pousse l'organe auxiliaire (30) contre un moyen de repos (37).

9. Soupape selon la revendication 1,
**caractérisée en ce que**
la soupape est un injecteur de carburant, notamment pour l'injection directe de carburant dans la chambre de combustion d'un moteur à combustion interne.
